# EUROPEAN PATENT APPLICATION

(11) **EP 4 738 240 A1**
(43) Date of publication of application: **06.05.2026**
(21) Application number: 25192680.4
(22) Date of filing: 30.07.2025
(51) Int. Cl.: G06T 3/4053

(54) **EFFICIENT SUPER-SAMPLING IN VIDEOS USING HISTORICAL INTERMEDIATE FEATURES**

(30) Priority: 30.10.2024 US 202418932092
(71) Applicant: INTEL Corporation, Santa Clara, CA 95054 (US)
(72) Inventor: Saha, Tanujay, Folsom, 95630 (US)
(74) Representative: Goddar, Heinz J.

(57) **Abstract**

Systems and methods for providing a high-resolution gaming experience on typical computer systems, including computer systems without high-end d-GPUs. In particular, systems and methods are provided for optimizing deep learning-based super-sampling methods. A hardware-aware optimization technique for super-sampling machine learning networks uses a subset of intermediate outputs of the machine learning model for the previous game frame for convolution operations on the current frame, thereby reducing compute usage and latency without sacrificing quality of the output. The inputs are concatenated and passed through a convolutional neural network (CNN), such as a U-net-based CNN. The output of the CNN is a high-resolution image frame that can be post-processed to generate a final output. The hardware optimization technique can be implemented in a neural network framework that divides the machine learning inference across available compute resources on the computer platform.

## Description

### Technical Field

This disclosure relates generally to signal processing, and more specifically, to image signal processing and artificial intelligence processing.

### Background

The last decade has witnessed a rapid rise in Al (artificial intelligence) based data processing. Gaming platforms use artificial intelligence to provide real-time high-definition game frame renderings. High-end discrete general processing units (d-GPUs) are used to provide the high-definition renderings due to the high-compute power utilized by the algorithms. However, many computers do not include high-end d-GPUs, thus restricting access to high-definition renderings and the high-end gaming experience to users with selected computers.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
FIG. 1 is a block diagram of an example deep learning system, in accordance with various embodiments.
FIG. 2 illustrates an example overview of a convolution pipeline that includes replacing convolutions on a current frame with outputs from a previous frame, in accordance with various embodiments.
FIG. 3 illustrates an example of a super sampling pipeline, in accordance with various embodiments.
FIG. 4 illustrates an example DNN, in accordance with various embodiments.
FIG. 5 is a block diagram illustrating an example of a neural network architecture that can perform efficient super-sampling methods using intermediate outputs for a previous image frame, in accordance with various embodiments.
FIG. 6 is a flowchart showing a method of super sampling in videos using previous intermediate features, in accordance with various embodiments.
FIG. 7 is a block diagram of an example computing device, in accordance with various embodiments.

### Detailed Description

### Overview

Systems and methods are presented herein for providing a high-resolution gaming experience on typical computer systems, including computer systems without high-end d-GPUs. In particular, systems and methods are provided for optimizing deep learning-based super-sampling methods. A hardware-aware optimization technique for super-sampling machine learning networks uses intermediate outputs of the machine learning model for the previous game frame for convolution operations on the current frame. The intermediate outputs can be substituted for convolution operations on the current frame, thereby reducing compute usage and latency without sacrificing quality of the output. The hardware optimization technique can be implemented in a neural network framework that divides the machine learning inference across available compute resources on the computer platform, including, for example, the central processing unit (CPU), the integrated graphics processing unit (iGPU), and the integrated neural processing unit (iNPU), in a system-on-chip (SOC) platform. By spreading the machine learning inference across various compute resources, the iGPU can have bandwidth to compute other game rendering tasks.

Traditional gaming platforms include high-end d-GPUs that use artificial intelligence to provide real-time high-definition game frame renderings. High-end discrete general processing units (d-GPUs) are used to provide the high-definition renderings due to the high-compute power utilized by the algorithms. Additionally, traditional machine-learning-based super-sampling techniques use substantial computational resources that are not suitable for real-time application on computing devices that do not include high-end d-GPUs, such as gaming laptops. However, many computers do not include high-end d-GPUs, thus restricting access to high-definition renderings and the high-end gaming experience to users with selected computers.

According to various implementations, systems and methods are provided for decreasing compute resources used for machine-learning-based super-sampling. In general, super-sampling takes as input the current frame rendered at a low resolution by the GPU, the high-resolution output of the previous frame, and the motion vectors for the current frame. Systems and methods are provided herein to use as input the current frame rendered at a low resolution by the GPU, the previous frame rendered at a low resolution by the GPU, the motion vectors for the current frame, and intermediate convolution outputs from processing of the previous frame. The inputs are concatenated and passed through a convolutional neural network (CNN), such as a U-net-based CNN. The output of the CNN is a high-resolution image frame that can be post-processed to generate a final output. According to various examples, high-end frame generation technologies consume most of the compute resources in SoC systems, and the systems and methods discussed herein reduce the compute resource usage for high-end frame generation by ~20% while maintaining a similar perceptual video quality.

For purposes of explanation, specific numbers, materials and configurations are set forth in order to provide a thorough understanding of the illustrative implementations. However, it will be apparent to one skilled in the art that the present disclosure may be practiced without the specific details or/and that the present disclosure may be practiced with only some of the described aspects. In other instances, well known features are omitted or simplified in order not to obscure the illustrative implementations.

Further, references are made to the accompanying drawings that form a part hereof, and in which is shown, by way of illustration, embodiments that may be practiced. It is to be understood that other embodiments may be utilized, and structural or logical changes may be made without departing from the scope of the present disclosure. Therefore, the following detailed description is not to be taken in a limiting sense.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the following detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, device, or CNN accelerator that comprises a list of elements is not necessarily limited to only those elements but may include other elements not expressly listed or inherent to such method, process, device, or CNN accelerators. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description below and the accompanying drawings.

### Example Deep Learning System

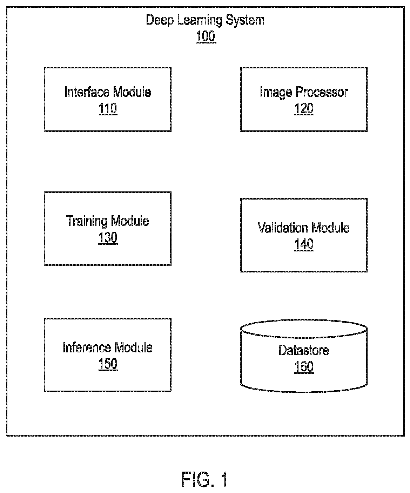

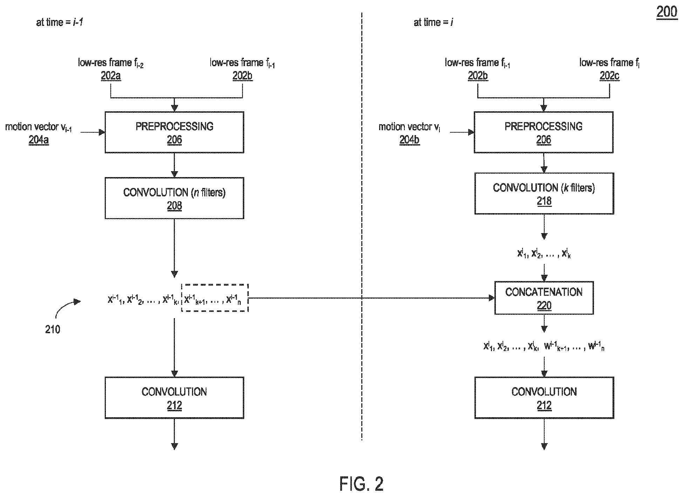

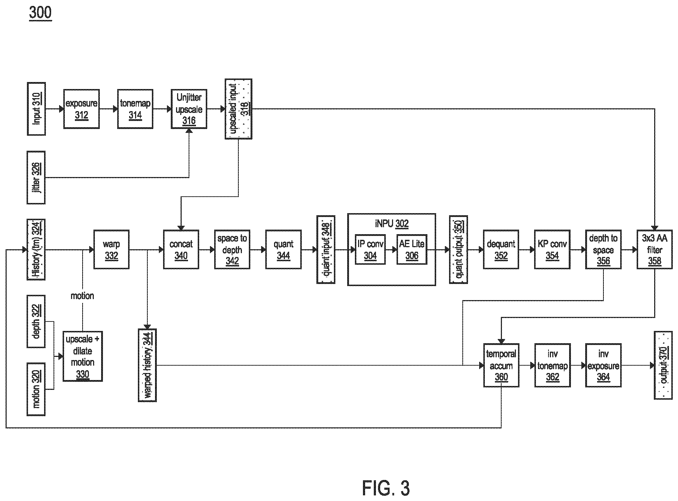

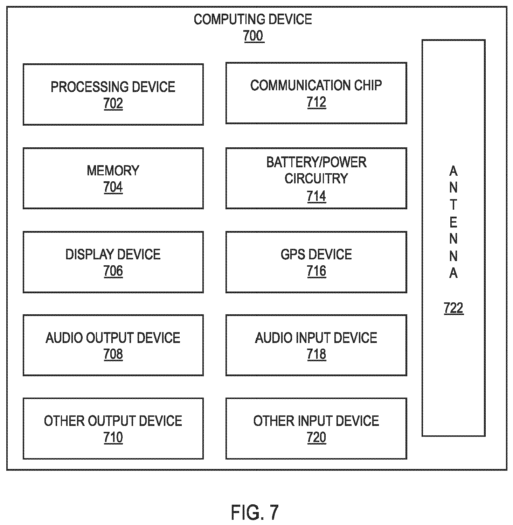

FIG. 1 is a block diagram of an example deep learning system 100, in accordance with various embodiments. The deep learning system 100 includes an image processor 120, which can be used for optimizing deep learning-based super-sampling methods and providing a high-resolution gaming experience. In some examples, the image processor 120 includes a super-sampling pipeline including an iNPU, as described below with respect to FIGS. 2 and 3. In some examples, the deep learning system 100 trains deep neural networks (DNNs) for various tasks, including deep learning-based super-sampling and high resolution image processing. The deep learning system 100 includes an interface module 110, an image processor 120, a training module 130, a validation module 140, an inference module 150, and a datastore 160. In other embodiments, alternative configurations, different or additional components may be included in the deep learning system 100. Further, functionality attributed to a component of the deep learning system 100 may be accomplished by a different component included in the deep learning system 100 or a different system. The deep learning system 100 or a component of the deep learning system 100 (e.g., the training module 130 or inference module 150) may include the computing device 700 in FIG. 7.

The interface module 110 facilitates communications of the deep learning system 100 with other systems. As an example, the interface module 110 supports the deep learning system 100 to distribute trained DNNs to other systems, e.g., computing devices configured to apply DNNs to perform tasks. As another example, the interface module 110 establishes communications between the deep learning system 100 with an external database to receive data that can be used to train DNNs or input into DNNs to perform tasks. In some embodiments, data received by the interface module 110 may have a data structure, such as a matrix. In some embodiments, data received by the interface module 110 may be an image, a series of images, and/or a video stream.

The image processor 120 performs image processing on video images. In general, the image processor 120 receives an image frame from a gaming platform module and processes the image using a neural network, such as a convolution neural network. The image processor 120 includes a super-sampling machine learning network and used the intermediate outputs of the machine learning model for the previous game frame to substitute convolution operations on the current frame. The super-sampling machine learning model reduces compute resource usage and latency without sacrificing output quality. In some examples, the image processor splits machine learning inference and implements the optimization super-sampling machine learning model inference across multiple available compute units in the platform, such as the CPU, the iGPU, and the iNPU on the client SoC. Splitting the inference operations across various compute units frees iGPU resources to compute other game rendering tasks.

During training, the image processor 120 can use a training data set including gaming video images processed using the conventional super-sampling method. The training data can include full resolution images generated using high-end d-GPUs. In some examples, differences between the output of the image processor 120 and the training data set can be used to calibrate the image processor 120 to minimize the differences.

In various examples, as described herein, the image processor 120 includes one or more neural networks for processing input images. In some examples, the image processor 120 includes one or more deep neural networks (DNN) for processing input images. The training module 130 trains DNNs using training datasets. In some embodiments, a training dataset for training a DNN may include one or more images and/or videos, each of which may be a training sample. In some examples, the training module 130 trains the image processor 120. The training module 130 may receive game video data for processing with the image processor 120 as described herein. In some embodiments, the training module 130 may input different data into different layers of the DNN. For every subsequent DNN layer, the input data may be less than the previous DNN layer. The training module 130 may adjust internal parameters of the DNN to minimize a difference between training data output and the video processed by the image processor 120. In some examples, the difference can be the difference between corresponding output frames in the video processed by the image processor 120 and the training data. In some examples, the difference between corresponding output frames can be measured as the number of pixels in the corresponding output frames that are different from each other.

In some embodiments, the image processor 102 includes one or more CNNs, and the training module 130 trains the image processor 102 in a manner similar to conventional CNNs. In one examples, the training module 130 can use a training process including about 72,000 iterations or more than about 72,000 iterations. When multiple sequences are present within a batch of video data, the training module 130 can ensure separation of features to prevent features of one video game sequence from influencing features of a different video game sequence. In particular, for each sequence in a bath, the CNN can process frames independently, maintaining the integrity of temporal information.

As discussed below, the CNN uses some features of the previous frame in processing a current frame. In some examples, for the first frame of each sequence, the model duplicates the first frame in place of the previous frame. Similarly, for the first frame of each sequence, corresponding features of the frame can be duplicated in place of features of the previous frame. Thus, using this initialization technique, the model starts with a clean slate for each new sequence, preserving the accuracy and consistency of feature extraction.

In some embodiments, the training module 130 records and analyzes training graphs. The training graphs can include metrics such as loss, accuracy, and convergence rate.

In some embodiments, a part of the training dataset may be used to initially train the DNN, and the rest of the training dataset may be held back as a validation subset used by the validation module 140 to validate performance of a trained DNN. The portion of the training dataset not including the tuning subset and the validation subset may be used to train the DNN. Additionally, validation checks can be performed during training to monitor the model's performance on unseen data, identify any overfitting issues, and ensure that the model generalizes well to new sequences.

The training module 130 also determines hyperparameters for training the DNN. Hyperparameters are variables specifying the DNN training process. Hyperparameters are different from parameters inside the DNN (e.g., weights of filters). In some embodiments, hyperparameters include variables determining the architecture of the DNN, such as number of hidden layers, etc. Hyperparameters also include variables which determine how the DNN is trained, such as batch size, number of epochs, etc. A batch size defines the number of training samples to work through before updating the parameters of the DNN. The batch size is the same as or smaller than the number of samples in the training dataset. The training dataset can be divided into one or more batches. The number of epochs defines how many times the entire training dataset is passed forward and backwards through the entire network. The number of epochs defines the number of times that the deep learning algorithm works through the entire training dataset. One epoch means that each training sample in the training dataset has had an opportunity to update the parameters inside the DNN. An epoch may include one or more batches. The number of epochs may be 1, 10, 50, 100, or even larger.

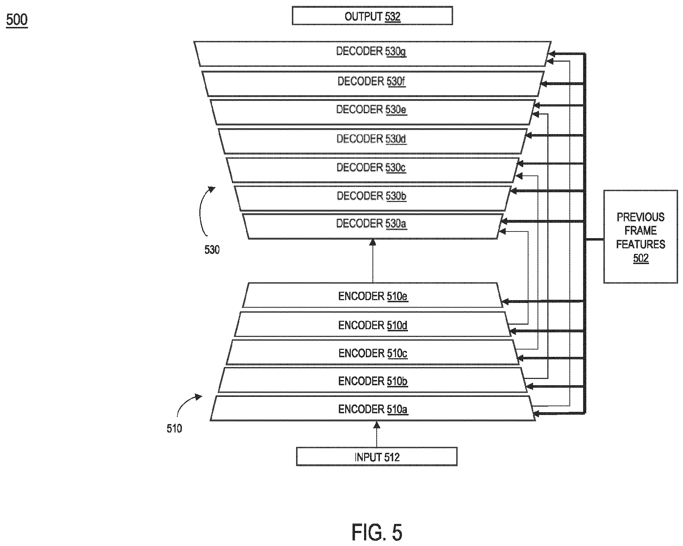

The training module 130 defines the architecture of the DNN, e.g., based on some of the hyperparameters. The architecture of the DNN includes an input layer, an output layer, and a plurality of hidden layers. The input layer of an DNN may include tensors (e.g., a multidimensional array) specifying attributes of the input image, such as the height of the input image, the width of the input image, and the depth of the input image (e.g., the number of bits specifying the color of a pixel in the input image). The output layer includes labels of objects in the input layer. The hidden layers are layers between the input layer and output layer. The hidden layers include one or more convolutional layers and one or more other types of layers, such as pooling layers, fully connected layers, normalization layers, softmax or logistic layers, and so on. The convolutional layers of the DNN abstract the input image to a feature map that is represented by a tensor specifying the feature map height, the feature map width, and the feature map channels (e.g., red, green, blue images include 3 channels). A pooling layer is used to reduce the spatial volume of input image after convolution. It is used between 2 convolution layers. A fully connected layer involves weights, biases, and neurons. It connects neurons in one layer to neurons in another layer. It is used to classify images between different categories by training. An example of a convolutional neural network is described below in greater detail with respect to FIG. 5.

In the process of defining the architecture of the DNN, the training module 130 also adds an activation function to a hidden layer or the output layer. An activation function of a layer transforms the weighted sum of the input of the layer to an output of the layer. The activation function may be, for example, a rectified linear unit activation function, a tangent activation function, or other types of activation functions.

After the training module 130 defines the architecture of the DNN, the training module 130 inputs a training dataset into the DNN. The training dataset includes a plurality of training samples. An example of a training dataset includes a series of images of a video stream. Unlabeled, real-world video is input to the image processor, and processed using the image processor parameters of the DNN to produce two different model-generated outputs: a first time-forward model-generated output and a second time-reversed model-generated output. In the backward pass, the training module 130 modifies the parameters inside the DNN ("internal parameters of the DNN") to minimize the differences between the first model-generated output is and the second model generated output. The internal parameters include weights of filters in the convolutional layers of the DNN. In some embodiments, the training module 130 uses a cost function to minimize the differences.

The training module 130 may train the DNN for a predetermined number of epochs. The number of epochs is a hyperparameter that defines the number of times that the deep learning algorithm will work through the entire training dataset. One epoch means that each sample in the training dataset has had an opportunity to update internal parameters of the DNN. After the training module 130 finishes the predetermined number of epochs, the training module 130 may stop updating the parameters in the DNN. The DNN having the updated parameters is referred to as a trained DNN.

The validation module 140 verifies accuracy of trained DNNs. In some embodiments, the validation module 140 inputs samples in a validation dataset into a trained DNN and uses the outputs of the DNN to determine the model accuracy. In some embodiments, a validation dataset may be formed of some or all the samples in the training dataset. Additionally or alternatively, the validation dataset includes additional samples, other than those in the training sets. In some embodiments, the validation module 140 may determine an accuracy score measuring the precision, recall, or a combination of precision and recall of the DNN. The validation module 140 may use the following metrics to determine the accuracy score: Precision = TP / (TP + FP) and Recall = TP / (TP + FN), where precision may be how many the reference classification model correctly predicted (TP or true positives) out of the total it predicted (TP + FP or false positives), and recall may be how many the reference classification model correctly predicted (TP) out of the total number of objects that did have the property in question (TP + FN or false negatives). The F-score (F-score = 2 * PR / (P + R)) unifies precision and recall into a single measure.

The validation module 140 may compare the accuracy score with a threshold score. In an example where the validation module 140 determines that the accuracy score of the augmented model is lower than the threshold score, the validation module 140 instructs the training module 130 to re-train the DNN. In one embodiment, the training module 130 may iteratively re-train the DNN until the occurrence of a stopping condition, such as the accuracy measurement indication that the DNN may be sufficiently accurate, or a number of training rounds having taken place.

The inference module 150 applies the trained or validated DNN to perform tasks. The inference module 150 may run inference processes of a trained or validated DNN. The inference module 150 may input real-world data into the DNN and receive an output of the DNN. The output of the DNN may provide a solution to the task for which the DNN is trained for. In various examples, small scale input (e.g., a small scale image) can save a large number of computations during inference.

The inference module 150 may aggregate the outputs of the DNN to generate a final result of the inference process. In some embodiments, the inference module 150 may distribute the DNN to other systems, e.g., computing devices in communication with the deep learning system 100, for the other systems to apply the DNN to perform the tasks. The distribution of the DNN may be done through the interface module 110. In some embodiments, the deep learning system 100 may be implemented in a server, such as a cloud server, an edge service, and so on. The computing devices may be connected to the deep learning system 100 through a network. Examples of the computing devices include edge devices.

The datastore 160 stores data received, generated, used, or otherwise associated with the deep learning system 100. For example, the datastore 160 stores video processed by the image processor 120 or used by the training module 130, validation module 140, and the inference module 150. The datastore 160 may also store other data generated by the training module 130 and validation module 140, such as the hyperparameters for training DNNs, internal parameters of trained DNNs (e.g., values of tunable parameters of activation functions, such as Fractional Adaptive Linear Units (FALUs)), etc. In the embodiment of FIG. 1, the datastore 160 is a component of the deep learning system 100. In other embodiments, the datastore 160 may be external to the deep learning system 100 and communicate with the deep learning system 100 through a network.

### Example Convolution Pipeline for Efficient Super Sampling

FIG. 2 illustrates an example overview of a convolution pipeline 200 that includes replacing convolutions on a current frame with outputs from a previous frame, in accordance with various embodiments. At any given timepoint, the convolution pipeline 200 receives a current image frame and the image frame from the previous timepoint. At time *i-1*, on the left, the image processing system 200 receives a first image frame 202a from time *i-2,* and a second image frame 202b from time *i-1*. The first 202a and second 202b image frames can be low resolution image frames. The image frames 202a, 202b, as well as a motion vector 204a from time *i-1*, are input to a preprocessing module 206. The preprocessing module 206 performs preprocessing on the input and outputs preprocessed frames to a first convolution module 208. Various preprocessing operations are illustrated in various modules of FIG. 3, in particular in the modules on the left side of FIG. 3, such as, for example, exposure module 312, tonemap module 314, unjitter upscale module 216, upscale + dilate motion module 330, and warp module 332, among others.

The first convolution module 208 includes n convolution filters and performs convolution operations of the output from the preprocessing module 206. In some examples, the first convolution module 208 can perform feature extraction, pattern detection, and/or dimensionality reduction. The first convolution module 208 generates an intermediate output for the frame at time *i-1.* In particular, the first convolution module 208 generates *n* intermediate convolution outputs *x* 210, one intermediate convolution output *x* for each of *n* convolution filters.

At time *i*, on the right side of FIG. 2, the image processing system 200 receives a first image frame 202b from time *i-1*, and a second image frame 202c from time *i.* The image frames 202b, 202c, as well as a motion vector 204b from time *i*, are input to the preprocessing module 206. The preprocessing module 206 performs preprocessing on the input and outputs preprocessed frames to a compact convolution module 218. The compact convolution module 218 includes *k* convolution filters and performs convolution operations of the output from the preprocessing module 206 as shown on the right hand side of FIG. 2, where *k* < *n.* In some examples, the compact convolution module 218 can perform feature extraction, pattern detection, and/or dimensionality reduction. The compact convolution module 218 generates an intermediate output for the frame at time *i*. In particular, the first convolution module 208 generates *k* intermediate convolution outputs *x*, one intermediate convolution output *x* for each of *k* convolution filters. The *k* intermediate convolution outputs *x* are then input to a concatenation module 220 that receives *k+1* through *n* intermediate convolution outputs *x* from a previous frame (at time *i-1*)*,* and concatenates the *k* intermediate convolution outputs *x* and the *k+1* through *n* intermediate convolution outputs *x* from the previous frame to generate n intermediate convolution outputs xⁱ1, xⁱ2, ... , xⁱk, wⁱ⁻¹ₖ₊₁, ... , wⁱ⁻¹ₙ, where wⁱ⁻¹ₖ₊₁, ... , wⁱ⁻¹ₙ are the intermediate convolution outputs from the previous frame (at time *i-1*).

As shown on the right side of FIG. 2, the intermediate convolution outputs from the concatenation module 220 are input to a second convolution module 212, which performs convolution operations for feature extraction, pattern detection, and/or dimensionality reduction.

According to various implementations, by using the *k+1* through *n* intermediate convolution outputs from the previous frame, the compact convolution module 218 performs fewer convolutions than the first convolution module 208, thus saving compute, power, and latency. Reducing latency frees up compute resources for additional features and allows for real-time super-sampled high end game rendering on typical client computing devices. Additionally, using intermediate features of the previous frame in place of convolution operations on the current frame results in higher temporal consistency by using a broader perceptive field in the temporal axis. In various implementations, the machine learning framework for the convolution neural network using the techniques shown in FIG. 2 allows for cross-implementation of super-sampling by offloading the CNN on the iNPU while implementing the render tasks on the iGPU, leading to further reduction in latency and maximal utilization of available compute resources. In various embodiments, intermediate convolution outputs from other previous frames can be used. For example, intermediate convolution outputs from the frame at time *i-2* can be used.

In various implementations, concatenating the features of the previous frame directly to the intermediate convolution outputs for the current frame can prevent any vanishing gradient issues, which may occur with deeper temporal dependencies or when relying on recurrent methods. By concatenating the features of the previous frame directly to the intermediate convolution outputs for the current frame, the prior frame information is treated as part of the input feature set for each frame.

In various embodiments, a U-Net architecture is used for the CNN, and the U-Net architecture can include skip connections. The skip connections can allow gradients to flow more easily through the network, thereby significantly reducing the likelihood of vanishing gradients. In some examples, using a U-Net architecture with skip connections can ensure that information from early layers is directly accessible to later layers, which enhances gradient stability and overall network performance. In various examples, the skip connections can be used for preservation of information that may otherwise be lost during the downsampling process in the encoder layers.

In some implementations, the CNN utilizes non-saturating activation functions, such as rectified linear unit (ReLU) functions and Leaky-ReLU functions, which have non-saturating properties. The ReLU functions help maintain gradient magnitude across layers, thereby preventing the gradients from diminishing as they propagate through the network.

In various embodiments, the CNN model is initialized with weights that are pre-trained without the feature concatenation technique described with respect to FIG. 2. After initializing the model with weights that are pre-trained without feature concatenation, the weights can be updated with further training or other feedback.

In some embodiments, different numbers of previous frames can be used to for feature concatenation. In some examples, using frames from other times (e.g., time *i-2,* time *i-3*) can increase computational efficiency, but performance can be affected. While the model can support the use of any number of previous frames during inference, in various examples, using the frame from time *i-1* results in sufficient computational efficiency while not affecting model performance, and a model using the frame from time *i-1* can be easily deployed on client-side systems.

Systems and methods including the feature concatenation model described with respect to FIG. 2 can process a video sequence of length *T* and feature dimension *D* with computational complexity of approximately *O(TD).* In general, feature concatenation systems and methods minimize computational complexity while maintaining accuracy. The feature concatenation systems and methods provide limited long-term dependency modeling but work well for short to moderate sequences, which is suitable for in-game frame sequences that rarely have any long-term dependencies. In comparison, a recurrent neural network such as a long short-term memory (LSTM) model, which is generally designed to handle sequence prediction problems and is effective for moderate to long sequences, has a computational complexity of approximately *O(TD²)* per layer. In another example, a transformer model, which is suitable for long sequences with high dependency requirements, has a computational complexity of approximately *O(T²D)* per layer.

### Example Super Sampling Pipeline

FIG. 3 illustrates an example of a super sampling pipeline 300, in accordance with various embodiments. In some implementations, with the exception of the image processing (IP) convolution module 304 and the auto encoder (AE) Lite module 306, which are implemented in the iNPU 302, the other blocks in the pipeline 300 are implemented in the iGPU. According to some examples, the textured boxes 318, 324, 344, 348, 350, 370 are high resolution pipeline modules.

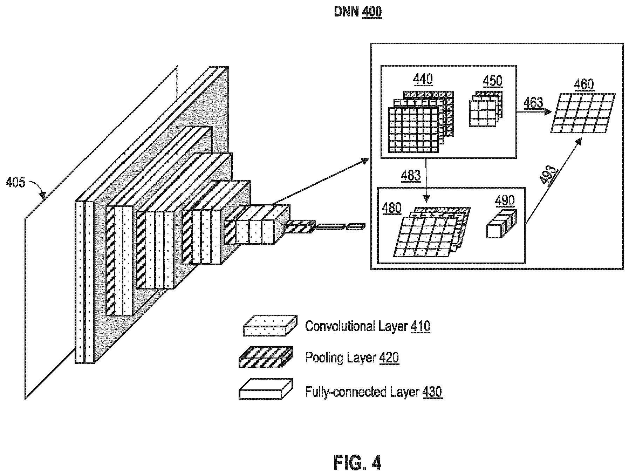

As shown in FIG. 3, the IP convolution module 304 and the autoencoder module 306 are implemented in the iNPU 302. The IP convolution module 304 can apply filters to input images for example for edge detection, blurring, sharpening, and feature extraction. In various examples, as described below with respect to FIG. 4, the IP convolution module 304 can include a kernel or filter that includes a small matrix in which each element in the kernel represents a weight that is used to modify the input image. The IP convolution module 304 can also include a sliding window that slides over the input image one pixel at a time and performs element-wise multiplication between the kernel and the overlapping region of the image. The IP convolution module 304 can perform element-wise multiplication on and sum the results to produce a single value that is a pixel in an output image. The systems and methods described herein can be also used to reduce the latency of the autoencoder module 306 and allow for real-time super-sampling. In some examples, the autoencoder module 306 is a U-Net based autoencoder.

Before the input signals are input to the IP convolution module 304, the input is processed at a space-to-depth module 342. In some embodiments, the space-to-depth module 342 divides each input channel into multiple sections and stacks the sections in parallel. In some examples, the space-to-depth module 342 divides the input channel into four quadrants and stacks the quadrants in parallel. Thus, for a system with four input channels, the four input channels are converted into sixteen quadrants which can be represented as sixteen channels, before the input channels are passed to the IP convolution module 304 and the autoencoder 306. In various examples, dividing the input channels into multiple sections helps expand the spatial perceptual field of the convolutional filters in the IP convolution module 304, thereby increasing the accuracy of the IP convolution module 304 model and reducing latency of the IP convolution module 304 model. As shown in FIG. 2, the temporal perceptual field is also increased by partially replacing the convolutions at each layer with corresponding intermediate feature outputs of the corresponding filter on the previous frame. The replacement technique provides the model with increased temporal context while reducing computations.

According to various implementations, differing numbers of previous intermediate features replace convolutions at various layers. For example, in the shallow layers of the autoencoder module 306, there may be fewer replacements of convolutions with previous intermediate features than at deeper layers. Similarly, in the deeper layers of the autoencoder module 306, there may be more replacements of convolutions with previous intermediate features than at the shallower layers. In some examples, a number of replacements of convolutions with previous intermediate features increases at deeper layers of the neural network. In some examples, initial (shallow) layers of the autoencoder module 306 extract high-level features of the frame, such as color, lines, and shapes. These high-level features are highly specific to the selected frame and change from frame to frame. Deeper layers of the network extract more subtle features of the frame such as texture, depth, and some features that are imperceptible to the human eye. In various examples, the subtle features do not change drastically between consecutive frames. Thus, using intermediate features of the previous frame at the deeper layers of the network does not have a perceptible effect on the quality of the output. Table 1 below illustrates one example of a number of channels replaced with previous intermediate features per layer in the encoder layers of the autoencoder module 306. Note that the replacement ratio (right column) increases with the layer depth.

**TABLE 1**

| Layer Depth | Original Channels | Optimized Channels | Replacement Ratio (%) |
|---|---|---|---|
| 1 | 16 | 16 | 0 |
| 2 | 32 | 28 | 12.5 |
| 3 | 64 | 56 | 12.5 |
| 4 | 128 | 96 | 25 |
| 5 | 64 | 32 | 50 |

The encoded data is subsequently decoded at various decoder layers. Table 2 below illustrates one example of a number of channels replaced with previous intermediate features per layer in the decoder layers of the autoencoder 306.

**TABLE 2**

| Layer Depth | Original Channels | Optimized Channels | Replacement Ratio (%) |
|---|---|---|---|
| 4 | 64 | 64 | 0 |
| 4b | 32 | 24 | 25 |
| 3 | 32 | 32 | 0 |
| 3b | 16 | 12 | 25 |
| 2 | 16 | 16 | 0 |
| 2b | 16 | 14 | 12.5 |
| 1 | 16 | 16 | 0 |

### Example Deep Neural Network for Efficient Super Sampling

FIG. 4 illustrates an example DNN 400, in accordance with various embodiments. For purpose of illustration, the DNN 400 in FIG. 4 is a CNN. The DNN 400 of FIG. 4 may be a U-Net architecture. In other embodiments, the DNN 400 may be other types of DNNs. The DNN 400 is trained to receive images for real-time high-definition game frame renderings. In the embodiments of FIG. 4, the DNN 400 receives a low resolution input frame 405 as well as a high resolution output from the previous frame. The DNN 400 includes a sequence of layers comprising a plurality of convolutional layers 410 (individually referred to as "convolutional layer 410"), a plurality of pooling layers 420 (individually referred to as "pooling layer 420"), and a plurality of fully connected layers 430 (individually referred to as "fully connected layer 430"). In other embodiments, the DNN 400 may include fewer, more, or different layers. In some examples, the DNN 400 uses the high resolution output from the previous frame to decrease the number of layers and improve DNN 400 efficiency. In an inference of the DNN 400, the layers of the DNN 400 execute tensor computation that includes many tensor operations, such as convolution (e.g., multiply-accumulate (MAC) operations, etc.), pooling operations, elementwise operations (e.g., elementwise addition, elementwise multiplication, etc.), other types of tensor operations, or some combination thereof.

The convolutional layers 410 summarize the presence of features in the input image 405. The convolutional layers 410 function as feature extractors. In some examples, the high resolution output from the previous frame includes information about features in the input image 405, thereby reducing the convolutional layers 410.

The first layer of the DNN 400 is a convolutional layer 410. In an example, a convolutional layer 410 performs a convolution on an input tensor 440 (also referred to as IFM 440) and a filter 450. As shown in FIG. 4, the IFM 440 is represented by a 7×7×3 three-dimensional (3D) matrix. The IFM 440 includes 3 input channels, each of which is represented by a 7×7 two dimensional (2D) matrix. The 7×7 2D matrix includes 7 input elements (also referred to as input points) in each row and seven input elements in each column. The filter 450 is represented by a 3×3×3 3D matrix. The filter 450 includes 3 kernels, each of which may correspond to a different input channel of the IFM 440. A kernel is a 2D matrix of weights, where the weights are arranged in columns and rows. A kernel can be smaller than the IFM. In the embodiments of FIG. 4, each kernel is represented by a 3×3 2D matrix. The 3×3 kernel includes 3 weights in each row and three weights in each column. Weights can be initialized and updated by backpropagation using gradient descent. The magnitudes of the weights can indicate importance of the filter 450 in extracting features from the IFM 440.

The convolution includes MAC operations with the input elements in the IFM 440 and the weights in the filter 450. The convolution may be a standard convolution 463 or a depthwise convolution 483. In the standard convolution 463, the whole filter 450 slides across the IFM 440. All the input channels are combined to produce an output tensor 460 (also referred to as output feature map (OFM) 460). The OFM 460 is represented by a 5×5 2D matrix. The 5×5 2D matrix includes 5 output elements (also referred to as output points) in each row and five output elements in each column. For purpose of illustration, the standard convolution includes one filter in the embodiments of FIG. 4. In embodiments where there are multiple filters, the standard convolution may produce multiple output channels in the OFM 460.

The multiplication applied between a kernel-sized patch of the IFM 440 and a kernel may be a dot product. A dot product is the elementwise multiplication between the kernel-sized patch of the IFM 440 and the corresponding kernel, which is then summed, always resulting in a single value. Because it results in a single value, the operation is often referred to as the "scalar product." Using a kernel smaller than the IFM 440 is intentional as it allows the same kernel (set of weights) to be multiplied by the IFM 440 multiple times at different points on the IFM 440. Specifically, the kernel is applied systematically to each overlapping part or kernel-sized patch of the IFM 440, left to right, top to bottom. The result from multiplying the kernel with the IFM 440 one time is a single value. As the kernel is applied multiple times to the IFM 440, the multiplication result is a 2D matrix of output elements. As such, the 2D output matrix (i.e., the OFM 560) from the standard convolution 463 is referred to as an OFM.

In the depthwise convolution 483, the input channels are not combined. Rather, MAC operations are performed on an individual input channel and an individual kernel and produce an output channel. As shown in FIG. 4, the depthwise convolution 483 produces a depthwise output tensor 480. The depthwise output tensor 480 is represented by a 5×5×3 3D matrix. The depthwise output tensor 480 includes 3 output channels, each of which is represented by a 5×5 2D matrix. The 5×5 2D matrix includes 5 output elements in each row and five output elements in each column. Each output channel is a result of MAC operations of an input channel of the IFM 440 and a kernel of the filter 450. For instance, the first output channel (patterned with dots) is a result of MAC operations of the first input channel (patterned with dots) and the first kernel (patterned with dots), the second output channel (patterned with horizontal strips) is a result of MAC operations of the second input channel (patterned with horizontal strips) and the second kernel (patterned with horizontal strips), and the third output channel (patterned with diagonal stripes) is a result of MAC operations of the third input channel (patterned with diagonal stripes) and the third kernel (patterned with diagonal stripes). In such a depthwise convolution, the number of input channels equals the number of output channels, and each output channel corresponds to a different input channel. The input channels and output channels are referred to collectively as depthwise channels. After the depthwise convolution, a pointwise convolution 493 is then performed on the depthwise output tensor 480 and a 1×1×3 tensor 490 to produce the OFM 460.

The OFM 460 is then passed to the next layer in the sequence. In some embodiments, the OFM 460 is passed through an activation function. An example activation function is the rectified linear activation function (ReLU). ReLU is a calculation that returns the value provided as input directly, or the value zero if the input is zero or less. The convolutional layer 410 may receive several images as input and calculate the convolution of each of them with each of the kernels. This process can be repeated several times. For instance, the OFM 460 is passed to the subsequent convolutional layer 410 (i.e., the convolutional layer 410 following the convolutional layer 410 generating the OFM 460 in the sequence). The subsequent convolutional layers 410 perform a convolution on the OFM 460 with new kernels and generates a new feature map. The new feature map may also be normalized and resized. The new feature map can be kernelled again by a further subsequent convolutional layer 410, and so on.

In some embodiments, a convolutional layer 410 has four hyperparameters: the number of kernels, the size F kernels (e.g., a kernel is of dimensions F×F×D pixels), the S step with which the window corresponding to the kernel is dragged on the image (e.g., a step of one means moving the window one pixel at a time), and the zero-padding P (e.g., adding a black contour of P pixels thickness to the input image of the convolutional layer 410). The convolutional layers 410 may perform various types of convolutions, such as 2-dimensional convolution, dilated or atrous convolution, spatial separable convolution, depthwise separable convolution, transposed convolution, and so on. The DNN 400 includes 16 convolutional layers 410. In other embodiments, the DNN 400 may include a different number of convolutional layers.

The pooling layers 420 down-sample feature maps generated by the convolutional layers, e.g., by summarizing the presence of features in the patches of the feature maps. A pooling layer 420 is placed between two convolution layers 410: a preceding convolutional layer 410 (the convolution layer 410 preceding the pooling layer 420 in the sequence of layers) and a subsequent convolutional layer 410 (the convolution layer 410 subsequent to the pooling layer 420 in the sequence of layers). In some embodiments, a pooling layer 420 is added after a convolutional layer 410, e.g., after an activation function (e.g., ReLU, etc.) has been applied to the OFM 460.

A pooling layer 420 receives feature maps generated by the preceding convolution layer 410 and applies a pooling operation to the feature maps. The pooling operation reduces the size of the feature maps while preserving their important characteristics. Accordingly, the pooling operation improves the efficiency of the CNN and avoids over-learning. The pooling layers 420 may perform the pooling operation through average pooling (calculating the average value for each patch on the feature map), max pooling (calculating the maximum value for each patch of the feature map), or a combination of both. The size of the pooling operation is smaller than the size of the feature maps. In various embodiments, the pooling operation is 2×2 pixels applied with a stride of two pixels, so that the pooling operation reduces the size of a feature map by a factor of 2, e.g., the number of pixels or values in the feature map is reduced to one quarter the size. In an example, a pooling layer 420 applied to a feature map of 6×6 results in an output pooled feature map of 3×3. The output of the pooling layer 420 is inputted into the subsequent convolution layer 410 for further feature extraction. In some embodiments, the pooling layer 420 operates upon each feature map separately to create a new set of the same number of pooled feature maps.

The fully connected layers 430 are the last layers of the CNN. The fully connected layers 430 may be convolutional or not. The fully connected layers 430 receive an input operand. The input operand defines the output of the convolutional layers 410 and pooling layers 420 and includes the values of the last feature map generated by the last pooling layer 420 in the sequence. The fully connected layers 430 apply a linear combination and an activation function to the input operand and generate a vector. The vector may contain as many elements as there are classes: element i represents the probability that the image belongs to class i. Each element is therefore between 0 and 1, and the sum of all is worth one. These probabilities are calculated by the last fully connected layer 430 by using a logistic function (binary classification) or a softmax function (multi-class classification) as an activation function.

### Example Neural Network Architecture for Efficient Super Sampling

FIG. 5 is a block diagram illustrating an example of a neural network architecture 500 that can perform efficient super-sampling methods using intermediate outputs for a previous image frame, in accordance with various embodiments. The neural network architecture 500 includes a current time input frame 512, and previous frame features 502. Previous frame features 502 can include intermediate convolution outputs from a previous frame.

The current time input frame 512 is input to encoder 510, which includes multiple encoder layers 510a, 510b, 510c, 510d, 510e. In some examples, the encoder 510 is a convolutional encoder and includes convolutional U-Nets for image frame signals. The encoder 510 receives the input signals 512 at a first encoder convolutional layer 510a. In some examples, as discussed with respect to FIG. 3, the input signals 512 include multiple channels of input signals, and in some examples, the input signal channels are further segmented at a space and depth module, such as space and depth module 342 of FIG. 3. Thus, in various examples, the input 512 can include between one and sixteen input channels, between about two and sixteen input channels, between about four and sixteen input channels, between about four and thirty-two input channels, and/or more than thirty-two input channels. In some examples, expanding the input to the neural network can improve neural network output, neural network training routines, and/or neural network training outcomes.

According to various embodiments, the encoder layers 510a, 510b, 510c, 510d, 510e receive previous frame features 502, where the previous frame features can include corresponding encoder layer outputs for the previous frame. As discussed above with respect to FIG. 2, each of the encoder layers 510a, 510b, 510c, 510d, 510e performs a number of convolution operations to generate a current frame convolution output for each layer 510a, 510b, 510c, 510d, 510e, and a number of intermediate convolution outputs from the corresponding layer for the previous frame can be concatenated each of the current frame convolution outputs. In this way, various ones of the encoder layers 510a, 510b, 510c, 510d, 510e can perform fewer convolution operations than would traditionally be performed at that layer. One example of the number of convolution operations performed at each encoder layer is provided above with reference to Table 1, and that example is used in the following description. However, in various embodiments, any number of convolution operations can be performed at each encoder layer, with one or more layers including fewer convolution operations than an original embodiment of that layer and having a number of intermediate convolution outputs from the corresponding layer for the previous frame concatenated to the encoder layer convolution operation outputs for the current frame.

In some examples, the first encoder convolutional layer 510a processes the input signals 512, outputs 16 channels of outputs to a second encoder convolutional layer 510b. The second encoder convolutional layer 510b receives the 16 channels of signals and outputs 28 channels of outputs plus four intermediate convolution output channels of the corresponding second convolutional layer for the previous frame. The four intermediate convolution output channels of the corresponding second convolutional layer for the previous frame are concatenated to the 28 channels of output from the second convolutional layer 510b for the current frame. The 32 channels of output from the second convolutional layer 510b are output to a third encoder convolutional layer 510c.

The third encoder convolutional layer 510c receives the 32 channels of signals and outputs 56 channels of outputs plus eight intermediate convolution output channels of the corresponding third convolutional layer for the previous frame. The eight intermediate convolution output channels of the corresponding third convolutional layer for the previous frame are concatenated to the 56 channels of output from the third convolutional layer 510c for the current frame.

The fourth encoder convolutional layer 510d receives the 64 channels of signals and outputs 96 channels of outputs plus 32 intermediate convolution output channels of the corresponding fourth convolutional layer for the previous frame. The 32 intermediate convolution output channels of the corresponding fourth convolutional layer for the previous frame are concatenated to the 96 channels of output from the third convolutional layer 510d for the current frame, resulting in 128 convolution outputs.

The fifth encoder convolutional layer 510e receives the 128 channels of signals and outputs 32 channels of outputs plus 32 intermediate convolution output channels of the corresponding fifth convolutional layer for the previous frame. The 32 intermediate convolution output channels of the corresponding fifth convolutional layer for the previous frame are concatenated to the 32 channels of output from the fifth convolutional layer 510e for the current frame, resulting in 64 channels of output.

As shown in FIG. 5, the decoder side of the CNN 500 can have a similar structure. The output from the encoder 510 is received by a decoder 530. The decoder 530 includes multiple decoder layers 530a, 530b, 530c, 530d, 530e, 530f, 530g. In some examples, the decoder 530 is a convolutional decoder and includes convolutional U-Nets. The decoder 530 can also use intermediate convolution outputs 502 for the previous frame and concatenate them to intermediate convolution outputs for the current frame to generate the total number of expected outputs. Additionally, as shown in FIG. 5, the decoder layers can receive skip connections from corresponding encoder layers. The neural network architecture 500 including the encoder 510 and the decoder 530, with multiple blocks and block-wise skip connections, can be a U-Net.

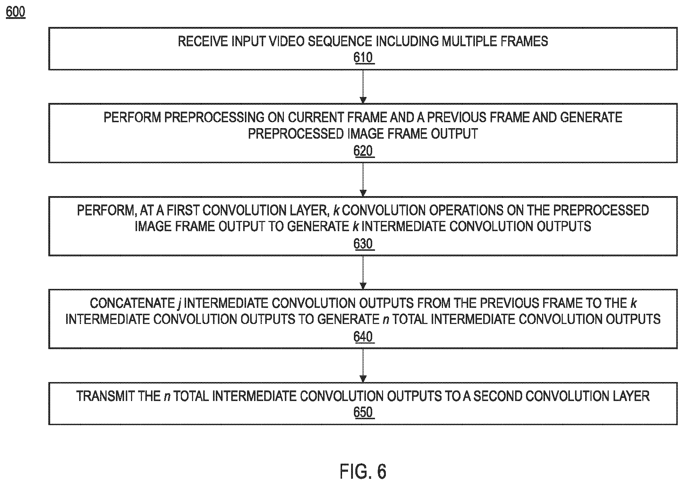

According to various implementations, the neural network architecture 600 shown in FIG. 6 is one example of a neural network that can be utilized for generation of high resolution image frames for video and gaming. In various examples, the neural network can have an architecture similar to demucs, and/or a hybrid demucs. In some examples, the architecture can include a U-Net encoder and/or decoder structure. In some examples, the encoder and decoder can have symmetric structures. In some examples, an encoder layer includes a convolution. In one example, the convolution can have a kernel size of eight, a stride of four, a first layer with a fixed number of channels (e.g., 48 or 64), and a doubling of the number of channels in subsequent layers. In some examples, the number of outputs is doubled in subsequent layers, but the number of channels (and/or convolution filters) used at each layer for a current frame is less than the number of outputs for the layer, since outputs from a previous frame are concatenated to a number of outputs for the current frame to generate a total number of outputs that is double the number of outputs at a previous layer. The neural network architecture can include a rectified linear unit (ReLU), and the neural network architecture can include a 1x1 convolution with a Gated Linear Unit Activation. A decoder layer can sum the contribution from the U-Net skip connection and the previous layer, and apply a 1x1 convolution with GLU. A decoder layer can also user outputs from a previous frame to replace a number of operations for a current frame.

### Example Method of Super Sampling in Videos using Previous Intermediate Features

FIG. 6 is a flowchart showing a method 600 of super sampling in videos using previous intermediate features, in accordance with various embodiments. The method 600 may be performed by the image processing systems of FIGS. 1-5. Although the method 600 is described with reference to the flowchart illustrated in FIG. 6, many other methods for may alternatively be used for super sampling of videos using previous intermediate features. For example, the order of execution of the steps in FIG. 6 may be changed. As another example, some of the steps may be changed, eliminated, or combined.

In various examples, the method 600 is a method for video signal processing. At step 610, an input video sequence is received, and the input video sequence includes multiple image frames including a current image frame and a previous image frame. In some examples, the image video sequence can be live video feed for a video gaming experience.

At step 620, preprocessing operations are performed on the current image frame as well as on a previous image frame. For example, the preprocessing can be performed on the current image frame at time *t*=*i*, and on the previously received image frame at time *t=i-1.* The preprocessing can also receive the motion vector for the current image frame. At step 620, a preprocessed image frame output is generated. The preprocessed image frame output is a current preprocessed image frame at time *t*=*i*.

At step 630, at a first convolution layer, a first set of *k* convolution operations is performed on the current preprocessed image frame to generate a first subset of *k* intermediate convolution outputs. At step 640, a previous subset of *j* intermediate convolution outputs from a previous frame are concatenated to the first subset of *k* intermediate convolution outputs to generate a first set of *n* intermediate convolution outputs (*i.e., k+j = n*)*.*

At step 650, the first set of *n* intermediate convolution outputs is transmitted to a second convolution layer. At the second convolution layer, a second set of convolution operations can be performed on the first set of *n* intermediate convolution outputs. In general, the input video sequence is processed by a CNN that can include multiple convolution layers. The convolution layers can include multiple encoder layers and multiple decoder layers. The output from the last decoder layer is the output of the CNN, and the output of the CNN is a high-resolution image frame. The method 600 can include outputting a high-resolution image frame.

### Example Computing Device

FIG. 7 is a block diagram of an example computing device 700, in accordance with various embodiments. In some embodiments, the computing device 700 can be used as at least part of the deep learning system 100, the image processing system 120, the pipeline 300, and/or the neural networks 400, 500. A number of components are illustrated in FIG. 7 as included in the computing device 700, but any one or more of these components may be omitted or duplicated, as suitable for the application. In some embodiments, some or all of the components included in the computing device 700 may be attached to one or more motherboards. In some embodiments, some or all of these components are fabricated onto a single system on a chip (SoC) die. Additionally, in various embodiments, the computing device 700 may not include one or more of the components illustrated in FIG. 7, but the computing device 700 may include interface circuitry for coupling to the one or more components. For example, the computing device 700 may not include a display device 706, but may include display device interface circuitry (e.g., a connector and driver circuitry) to which a display device 706 may be coupled. In another set of examples, the computing device 700 may not include an audio input device 718 or an audio output device 708, but may include audio input or output device interface circuitry (e.g., connectors and supporting circuitry) to which an audio input device 718 or audio output device 708 may be coupled.

The computing device 700 may include a processing device 702 (e.g., one or more processing devices). The processing device 702 processes electronic data from registers and/or memory to transform that electronic data into other electronic data that may be stored in registers and/or memory. The computing device 700 may include a memory 704, which may itself include one or more memory devices such as volatile memory (e.g., DRAM), nonvolatile memory (e.g., read-only memory (ROM)), high bandwidth memory (HBM), flash memory, solid state memory, and/or a hard drive. In some embodiments, the memory 704 may include memory that shares a die with the processing device 702. In some embodiments, the memory 704 includes one or more non-transitory computer-readable media storing instructions executable to perform deep learning operations, e.g., the methods described above in conjunction with FIGS. 1-6. The instructions stored in the one or more non-transitory computer-readable media may be executed by the processing device 702.

In some embodiments, the computing device 700 may include a communication chip 712 (e.g., one or more communication chips). For example, the communication chip 712 may be configured for managing wireless communications for the transfer of data to and from the computing device 700. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not.

The communication chip 712 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication chip 712 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication chip 712 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication chip 712 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication chip 712 may operate in accordance with other wireless protocols in other embodiments. The computing device 700 may include an antenna 722 to facilitate wireless communications and/or to receive other wireless communications (such as AM or FM radio transmissions).

In some embodiments, the communication chip 712 may manage wired communications, such as electrical, optical, or any other suitable communication protocols (e.g., the Ethernet). As noted above, the communication chip 712 may include multiple communication chips. For instance, a first communication chip 712 may be dedicated to shorter-range wireless communications such as Wi-Fi or Bluetooth, and a second communication chip 712 may be dedicated to longer-range wireless communications such as global positioning system (GPS), EDGE, GPRS, CDMA, WiMAX, LTE, EV-DO, or others. In some embodiments, a first communication chip 712 may be dedicated to wireless communications, and a second communication chip 712 may be dedicated to wired communications.

The computing device 700 may include battery/power circuitry 714. The battery/power circuitry 714 may include one or more energy storage devices (e.g., batteries or capacitors) and/or circuitry for coupling components of the computing device 700 to an energy source separate from the computing device 700 (e.g., AC line power).

The computing device 700 may include a display device 706 (or corresponding interface circuitry, as discussed above). The display device 706 may include any visual indicators, such as a heads-up display, a computer monitor, a projector, a touchscreen display, a liquid crystal display (LCD), a light-emitting diode display, or a flat panel display, for example.

The computing device 700 may include an audio output device 708 (or corresponding interface circuitry, as discussed above). The audio output device 708 may include any device that generates an audible indicator, such as speakers, headsets, or earbuds, for example.

The computing device 700 may include an audio input device 718 (or corresponding interface circuitry, as discussed above). The audio input device 718 may include any device that generates a signal representative of a sound, such as microphones, microphone arrays, or digital instruments (e.g., instruments having a musical instrument digital interface (MIDI) output).

The computing device 700 may include a GPS device 716 (or corresponding interface circuitry, as discussed above). The GPS device 716 may be in communication with a satellite-based system and may receive a location of the computing device 700, as known in the art.

The computing device 700 may include another output device 710 (or corresponding interface circuitry, as discussed above). Examples of the other output device 710 may include an audio codec, a video codec, a printer, a wired or wireless transmitter for providing information to other devices, or an additional storage device.

The computing device 700 may include another input device 720 (or corresponding interface circuitry, as discussed above). Examples of the other input device 720 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 700 may have any desired form factor, such as a handheld or mobile computer system (e.g., a cell phone, a smart phone, a mobile internet device, a music player, a tablet computer, a laptop computer, a netbook computer, an ultrabook computer, a personal digital assistant (PDA), an ultramobile personal computer, etc.), a desktop computer system, a server or other networked computing component, a printer, a scanner, a monitor, a set-top box, an entertainment control unit, a vehicle control unit, a digital camera, a digital video recorder, or a wearable computer system. In some embodiments, the computing device 700 may be any other electronic device that processes data.

### Selected Examples

The following paragraphs provide various examples of the embodiments disclosed herein.

Example 1 provides a method including receiving, at an input channel, input video including a current image frame and a previous image frame; performing, at a first convolution layer, a first set of convolution operations on the current image frame to generate a first subset of intermediate convolution outputs; generating a first set of intermediate convolution outputs, including the first subset of intermediate convolution outputs and a previous subset of intermediate convolution outputs from the previous image frame; performing, at a second convolution layer, a second set of convolution operations on the first set of intermediate convolution outputs; and outputting a high-resolution image frame.

Example 2 provides the method of example 1, where generating the first set of intermediate convolution outputs includes concatenating the previous subset of intermediate convolution outputs to the first subset of intermediate convolution outputs.

Example 3 provides the method of example 2, where the first subset of intermediate convolution outputs includes outputs 1 through k for the current frame, and the previous subset of intermediate convolution outputs includes outputs k+1 through n for the previous frame.

Example 4 provides the method of example 1, where outputting the high-resolution image includes outputting a super-sampled image frame.

Example 5 provides the method of example 1, further including accessing, at the second convolution layer, via a skip connection, information from the first convolution layer.

Example 6 provides the method of example 1, where the first subset of intermediate convolution outputs is a current first subset of intermediate convolution outputs, where the previous subset of intermediate convolution outputs from the previous image frame is a previous first subset of intermediate convolution outputs, where performing the second set of convolution operations includes generating a current second subset of intermediate convolution outputs, and further including generating a second set of intermediate convolution outputs, including the current second subset of intermediate convolution outputs and a previous second subset of intermediate convolution outputs from the previous image frame.

Example 7 provides the method of example 1, further including dividing the input channel into a plurality of sections and stacking the sections in parallel to expand a spatial perceptual field of the first and second convolutional layers.

Example 8 provides the method of example 1, where performing the first set of convolution operations includes encoding the current image frame at an encoding layer.

Example 9 provides the method of example 1, further including performing preprocessing on the current image frame and the previous image frame and generating preprocessed image frame data, and where performing the first set of convolution operations includes performing the first set of convolution operations on the preprocessed image frame data.

Example 10 provides one or more non-transitory computer-readable media storing instructions executable to perform operations, the operations including receiving, at an input channel, input video including a current image frame and a previous image frame; performing, at a first convolution layer, a first set of convolution operations on the current image frame to generate a first subset of intermediate convolution outputs; generating a first set of intermediate convolution outputs, including the first subset of intermediate convolution outputs and a previous subset of intermediate convolution outputs from the previous image frame; performing, at a second convolution layer, a second set of convolution operations on the first set of intermediate convolution outputs; and outputting a high-resolution image frame.

Example 11 provides the one or more non-transitory computer-readable media of example 10, where generating the first set of intermediate convolution outputs includes concatenating the previous subset of intermediate convolution outputs to the first subset of intermediate convolution outputs.

Example 12 provides the one or more non-transitory computer-readable media of example 11, where the first subset of intermediate convolution outputs includes outputs 1 through k for the current frame, and the previous subset of intermediate convolution outputs includes outputs k+1 through n for the previous frame.

Example 13 provides the one or more non-transitory computer-readable media of example 10, where outputting the high-resolution image includes outputting a super-sampled image frame.

Example 14 provides the one or more non-transitory computer-readable media of example 10, further including accessing, at the second convolution layer, via a skip connection, information from the first convolution layer.

Example 15 provides the one or more non-transitory computer-readable media of example 10, where the first subset of intermediate convolution outputs is a current first subset of intermediate convolution outputs, where the previous subset of intermediate convolution outputs from the previous image frame is a previous first subset of intermediate convolution outputs, where performing the second set of convolution operations includes generating a current second subset of intermediate convolution outputs, and further including generating a second set of intermediate convolution outputs, including the current second subset of intermediate convolution outputs and a previous second subset of intermediate convolution outputs from the previous image frame.

Example 16 provides the one or more non-transitory computer-readable media of example 10, further including dividing the input channel into a plurality of sections and stacking the sections in parallel to expand a spatial perceptual field of the first and second convolutional layers.

Example 17 provides an apparatus, including a computer processor for executing computer program instructions; and a non-transitory computer-readable memory storing computer program instructions executable by the computer processor to perform operations including receiving, at an input channel, input video including a current image frame and a previous image frame; performing, at a first convolution layer, a first set of convolution operations on the current image frame to generate a first subset of intermediate convolution outputs; generating a first set of intermediate convolution outputs, including the first subset of intermediate convolution outputs and a previous subset of intermediate convolution outputs from the previous image frame; performing, at a second convolution layer, a second set of convolution operations on the first set of intermediate convolution outputs; and outputting a high-resolution image frame.

Example 18 provides the apparatus of example 17, where generating the first set of intermediate convolution outputs includes concatenating the previous subset of intermediate convolution outputs to the first subset of intermediate convolution outputs.

Example 19 provides the apparatus of example 18, where the first subset of intermediate convolution outputs includes outputs 1 through k for the current frame, and the previous subset of intermediate convolution outputs includes outputs k+1 through n for the previous frame.

Example 20 provides the apparatus of example 17, where the first subset of intermediate convolution outputs is a current first subset of intermediate convolution outputs, where the previous subset of intermediate convolution outputs from the previous image frame is a previous first subset of intermediate convolution outputs, where performing the second set of convolution operations includes generating a current second subset of intermediate convolution outputs, and further including generating a second set of intermediate convolution outputs, including the current second subset of intermediate convolution outputs and a previous second subset of intermediate convolution outputs from the previous image frame.

The above description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

## Claims

1. A method comprising:
receiving, at an input channel, input video including a current image frame and a previous image frame;
performing, at a first convolution layer, a first set of convolution operations on the current image frame to generate a first subset of intermediate convolution outputs;
generating a first set of intermediate convolution outputs, including the first subset of intermediate convolution outputs and a previous subset of intermediate convolution outputs from the previous image frame;
performing, at a second convolution layer, a second set of convolution operations on the first set of intermediate convolution outputs; and
outputting a high-resolution image frame.

2. The method of claim 1, wherein generating the first set of intermediate convolution outputs includes concatenating the previous subset of intermediate convolution outputs to the first subset of intermediate convolution outputs.

3. The method of claim 2, wherein the first subset of intermediate convolution outputs includes outputs 1 through k for the current frame, and the previous subset of intermediate convolution outputs includes outputs *k*+*1* through *n* for the previous frame.

4. The method of claims 1-3, wherein outputting the high-resolution image includes outputting a super-sampled image frame.

5. The method of claims 1-4, further comprising accessing, at the second convolution layer, via a skip connection, information from the first convolution layer.

6. The method of claims 1-5, wherein the first subset of intermediate convolution outputs is a current first subset of intermediate convolution outputs, wherein the previous subset of intermediate convolution outputs from the previous image frame is a previous first subset of intermediate convolution outputs, wherein performing the second set of convolution operations includes generating a current second subset of intermediate convolution outputs, and further comprising:
generating a second set of intermediate convolution outputs, including the current second subset of intermediate convolution outputs and a previous second subset of intermediate convolution outputs from the previous image frame.

7. The method of claims 1-6, further comprising dividing the input channel into a plurality of sections and stacking the sections in parallel to expand a spatial perceptual field of the first and second convolutional layers.

8. The method of claims 1-7, wherein performing the first set of convolution operations includes encoding the current image frame at an encoding layer.

9. The method of claims 1-8, further comprising performing preprocessing on the current image frame and the previous image frame and generating preprocessed image frame data, and wherein performing the first set of convolution operations includes performing the first set of convolution operations on the preprocessed image frame data.

10. One or more non-transitory computer-readable media storing instructions executable to perform operations, the operations comprising:
receiving, at an input channel, input video including a current image frame and a previous image frame;
performing, at a first convolution layer, a first set of convolution operations on the current image frame to generate a first subset of intermediate convolution outputs;
generating a first set of intermediate convolution outputs, including the first subset of intermediate convolution outputs and a previous subset of intermediate convolution outputs from the previous image frame;
performing, at a second convolution layer, a second set of convolution operations on the first set of intermediate convolution outputs; and
outputting a high-resolution image frame.

11. The one or more non-transitory computer-readable media of claim 10, wherein generating the first set of intermediate convolution outputs includes concatenating the previous subset of intermediate convolution outputs to the first subset of intermediate convolution outputs.

12. The one or more non-transitory computer-readable media of claim 11, wherein the first subset of intermediate convolution outputs includes outputs 1 through *k* for the current frame, and the previous subset of intermediate convolution outputs includes outputs *k*+*1* through *n* for the previous frame.

13. An apparatus, comprising:
a computer processor for executing computer program instructions; and
a non-transitory computer-readable memory storing computer program instructions executable by the computer processor to perform operations comprising:
receiving, at an input channel, input video including a current image frame and a previous image frame;
performing, at a first convolution layer, a first set of convolution operations on the current image frame to generate a first subset of intermediate convolution outputs;
generating a first set of intermediate convolution outputs, including the first subset of intermediate convolution outputs and a previous subset of intermediate convolution outputs from the previous image frame;
performing, at a second convolution layer, a second set of convolution operations on the first set of intermediate convolution outputs; and
outputting a high-resolution image frame.

14. The apparatus of claim 13, wherein generating the first set of intermediate convolution outputs includes concatenating the previous subset of intermediate convolution outputs to the first subset of intermediate convolution outputs.

15. The apparatus of claims 13-14, wherein the first subset of intermediate convolution outputs is a current first subset of intermediate convolution outputs, wherein the previous subset of intermediate convolution outputs from the previous image frame is a previous first subset of intermediate convolution outputs, wherein performing the second set of convolution operations includes generating a current second subset of intermediate convolution outputs, and further comprising:
generating a second set of intermediate convolution outputs, including the current second subset of intermediate convolution outputs and a previous second subset of intermediate convolution outputs from the previous image frame.
